# EUROPEAN PATENT APPLICATION

(11) **EP 4 671 652 A1**
(43) Date of publication of application: **31.12.2025**
(21) Application number: 23952104.0
(22) Date of filing: 14.12.2023
(51) Int. Cl.: F26B 15/18, F26B 21/00, F26B 25/02, F26B 25/06, F26B 13/08

(54) **ELECTRODE SHEET DRYING DEVICE AND BATTERY PRODUCTION SYSTEM**

(30) Priority: 12.09.2023 CN 202322477010 U
(71) Applicant: Contemporary Amperex Technology Co., Limited, Ningde, Fujian 352100 (CN)
(72) Inventor: GUO, Chao, Ningde, Fujian 352100 (CN); JIN, Peng, Ningde, Fujian 352100 (CN); WANG, Like, Ningde, Fujian 352100 (CN); SONG, Haohua, Ningde, Fujian 352100 (CN)
(74) Representative: Lorenz Seidler Gossel Part. mbB
(86) International application number: PCT/CN2023/138934
(87) International publication number: WO 2025/055181

(57) **Abstract**

The present application discloses an electrode sheet drying device and a battery production system. The electrode sheet drying device includes a housing, an endless heating belt, and a heating roller, where the housing has a heat-exchange drying chamber; the heat-exchange drying chamber has an inlet and an outlet that are oppositely disposed; the endless heating belt includes an inner surface and an outer surface that are oppositely disposed; the heating roller is in contact with the endless heating belt; a part of the endless heating belt passes through the heat-exchange drying chamber, the other part thereof is disposed outside the heat-exchange drying chamber; and the released electrode sheet is in contact with the outer surface of the endless heating belt in the heat-exchange drying chamber. A part of the endless heating belt passes through the heat-exchange drying chamber, and the other part thereof is disposed outside the heat-exchange drying chamber; and the released electrode sheet is in contact with the outer surface of the endless heating belt in the heat-exchange drying chamber, so that the electrode sheet abuts on and is heated by the endless heating belt, thereby improving heating and drying efficiency.

## Description

### [CROSS-REFERENCE TO RELATED APPLICATIONS]

The present application claims priority to Chinese Patent Application No. 2023224770101, filed on September 12, 2023, which is incorporated herein by reference in its entirety.

### [TECHNICAL FIELD]

The present application relates to the technical field of batteries, and in particular, to an electrode sheet drying device and a battery production system.

### [BACKGROUND]

During battery production, drying a battery electrode sheet by heating is an important process step. However, a method of heating a battery electrode sheet by an electrode sheet drying device in the related art is of low heating efficiency.

### [SUMMARY]

In view of above, the present application provides an electrode sheet drying device and a battery production system, so as to solve the problem of low heating efficiency of an electrode sheet drying device in the prior art.

In order to solve the above technical problem, the present application provides a first technical solution: there is provided an electrode sheet drying device, including:
a housing having a heat-exchange drying chamber, where the heat-exchange drying chamber has an inlet and an outlet that are oppositely disposed;
an endless heating belt including an inner surface and an outer surface that are oppositely disposed; and
a heating roller in contact with the endless heating belt,
where a part of the endless heating belt passes through the heat-exchange drying chamber, and the other part thereof is disposed outside the heat-exchange drying chamber; and the released electrode sheet is in contact with the outer surface of the endless heating belt in the heat-exchange drying chamber.

In the technical solution of the present application, the endless heating belt is first heated by the heating roller, and then the released electrode sheet is brought into contact with the outer surface of the endless heating belt in the heat-exchange drying chamber, so that the electrode sheet abuts on and is heated by the endless heating belt, thereby improving the efficiency of heating the electrode sheet. In the electrode sheet drying device of the present application, a part of the endless heating belt passes through the heat-exchange drying chamber, and the other part thereof is disposed outside the heat-exchange drying chamber. The endless heating belt in the heat-exchange drying chamber is in contact with the electrode sheet to continuously heat the electrode sheet. Therefore, the electrode sheet drying device of the present application only needs to dry and dehumidify the entire heat-exchange drying chamber using circulating air, and does not need to heat the circulating air, thereby improving the heating and drying effect on the electrode sheet. Compared with the heating roller directly heating the electrode sheet, the endless heating belt can better conduct heat from the heating roller to each position on the electrode sheet in the heat-exchange drying chamber, and can maintain a temperature of heating the electrode sheet in the heat-exchange drying chamber for a longer time.

In some embodiments, the other part of the endless heating belt is disposed at the bottom of the housing; there are a plurality of heating rollers, and the plurality of heating rollers are disposed at the bottom of the housing. The plurality of heating rollers disposed at the bottom of the housing are more easy to mount. One of two adjacent ones of the heating rollers is disposed in a loop of the endless heating belt and is in contact with the inner surface of the endless heating belt, and the other heating roller is disposed outside the loop of the endless heating belt and is in contact with the outer surface of the endless heating belt. By disposing one heating roller in the loop of the endless heating belt and disposing the other heating roller outside the loop of the endless heating belt, an area of the endless heating belt abutting on the heating roller may be increased, thereby improving the efficiency of heating the endless heating belt by the heating roller.

In some embodiments, the plurality of heating rollers are disposed on a side of the bottom of the housing close to the inlet.

In one or more embodiments of the present application, the plurality of heating rollers are disposed on the side of the bottom of the housing close to the inlet, so that the heated endless heating belt can abut on the electrode sheet as soon as possible after being heated, reducing a heat loss of the endless heating belt between the time when the endless heating belt is heated by the heating rollers and the time when the endless heating belt abuts on the electrode sheet in the heat-exchange drying chamber, and thereby improving the efficiency of heating the electrode sheet.

In some embodiments, the electrode sheet drying device further includes a passing roller and a support roller, where the passing roller is disposed at the bottom of the housing and is in transmission contact with the endless heating belt, and the passing roller may be used to support the endless heating belt to increase the running stability of the endless heating belt so that the endless heating belt may keep stably abutting on the electrode sheet. The support roller is disposed in the heat-exchange drying chamber and located between a bottom wall of the heat-exchange drying chamber and the endless heating belt in the heat-exchange drying chamber, so that the entire outer surface of the endless heating belt in the heat-exchange drying chamber is exposed; the support roller is in contact with the inner surface of the endless heating belt, and the support roller may be used to support the endless heating belt in the heat-exchange drying chamber, so that the outer surface of the endless heating belt in the heat-exchange drying chamber is arc-shaped, increasing an area of the endless heating belt abutting on the electrode sheet, and thereby improving the heating effect.

In some embodiments, there are a plurality of support rollers; the plurality of support rollers are spaced apart in parallel in a direction from the inlet to the outlet, and the heights of the plurality of support rollers gradually increase and then gradually decrease.

In one or more embodiments of the present application, the support rollers are disposed in the above manner, so that the endless heating belt in the heat-exchange drying chamber forms an arc shape protruding toward the top of the heat-exchange drying chamber, thereby increasing the area of the endless heating belt abutting on the electrode sheet.

In some embodiments, the electrode sheet drying device further includes:
a driving assembly connected to the endless heating belt, where the driving assembly is configured to be capable of driving the endless heating belt to continuously run;
an unrolling mechanism disposed on a side of the inlet, where the unrolling mechanism is configured to be capable of carrying and releasing a roll material of the electrode sheet, so that the released electrode sheet enters the heat-exchange drying chamber from the inlet and passes through the outlet; and
a rolling mechanism disposed on a side of the outlet, where the rolling mechanism is configured to be capable of rolling up the released electrode sheet that comes out from the outlet.

In one or more embodiments of the present application, the endless heating belt is driven by the driving assembly to continuously and cyclically run. The electrode sheet is unrolled by the unrolling mechanism and rolled up by the rolling mechanism, so that the electrode sheet can pass through the heat-exchange drying chamber for drying. Running speeds of the unrolling mechanism and the rolling mechanism may be adjusted according to the rolling and unrolling degree of the roll material of the electrode sheet, so as to keep the electrode sheet and the endless heating belt synchronously run, and reduce the risk of pulling apart the electrode sheet.

In some embodiments, the driving assembly includes a first driving assembly and a second driving assembly, the first driving assembly is disposed on an outer side of the inlet, and the second driving assembly is disposed on an outer side of the outlet.

In one or more embodiments of the present application, by disposing the driving assemblies on the outer side of the inlet and the outer side of the outlet respectively, the running stability of the endless heating belt and the uniformity of force applied to the endless heating belt may be improved.

In some embodiments, the electrode sheet drying device further includes a speed measuring assembly and a controller, where the speed measuring assembly is configured to be capable of measuring running speeds of the endless heating belt and the electrode sheet; the controller is electrically connected to each of the speed measuring assembly, the driving assembly, and the unrolling mechanism, where the controller is configured to control the driving assembly and/or the unrolling mechanism according to the running speeds of the endless heating belt and the electrode sheet measured by the speed measuring assembly, so as to adjust the running speeds of the endless heating belt and the electrode sheet to make the endless heating belt and the electrode sheet run synchronously. The endless heating belt and the electrode sheet run synchronously, so that stable heat exchange can be achieved, reducing friction between the endless heating belt and the electrode sheet, reducing wear of the endless heating belt and the electrode sheet, and thereby improving the heating effect on the electrode sheet.

In some embodiments, the speed measuring assembly includes:
a first speed measuring roller disposed on the outer side of the outlet and in contact with the endless heating belt to measure the running speed of the endless heating belt; and
a second speed measuring roller disposed on the outer side of the outlet and in contact with the electrode sheet to measure the running speed of the electrode sheet. The first speed measuring roller and the second speed measuring roller are disposed on the outer side of the outlet. On the one hand, since the electrode sheet coming out of the outlet has been heated and dried, the speed measuring rollers do not affect heat exchange between the endless heating belt and the electrode sheet even though the endless heating belt and the electrode sheet are in contact with the speed measuring rollers. On the other hand, the running speeds of the electrode sheet and the endless heating belt coming out of the outlet can better reflect running speeds of the electrode sheet and the endless heating belt in the heat-exchange drying chamber, so that the speed measurement is more accurate.

In some embodiments, the outer surface of the endless heating belt is a smooth surface, which can increase a contact area between the endless heating belt and the electrode sheet, thereby improving the heating and drying efficiency.

In some embodiments, the endless heating belt is a metal sheet, where the metal sheet has good resilience and high thermal conductivity, which can improve the thermal conduction efficiency of the endless heating belt for the electrode sheet.

In some embodiments, the metal sheet is a steel sheet. The steel sheet has the advantages of high strength, breaking resistance, and low cost.

In some embodiments, an air intake assembly and an air return assembly are provided in the heat-exchange drying chamber, one of the air intake assembly and the air return assembly is disposed between the bottom wall of the heat-exchange drying chamber and the endless heating belt in the heat-exchange drying chamber, and the other is disposed between a top wall of the heat-exchange drying chamber and the endless heating belt in the heat-exchange drying chamber.

In one or more embodiments of the present disclosure, the air intake assembly and the air return assembly are disposed in the above manner to enable incoming air to directly pass through the dried electrode sheet, and the air intake assembly and the air return assembly form circulating air, so that the circulating air takes away a solvent diffused by the heated electrode sheet, thereby ensuring that the electrode sheet is in a negative-pressure dry state.

In some embodiments, the air return assembly is disposed between the top wall of the heat-exchange drying chamber and the endless heating belt in the heat-exchange drying chamber, the air return assembly has an air return chamber, and a plurality of air return ports spaced apart in the direction from the inlet to the outlet are provided on a bottom wall of the air return chamber; the air intake assembly is disposed between the bottom wall of the heat-exchange drying chamber and the endless heating belt in the heat-exchange drying chamber and has an air intake port, there are a plurality of air intake assemblies, and the plurality of air intake assemblies are spaced apart in the direction from the inlet to the outlet.

In one or more embodiments of the present application, the solvent volatilized by the electrode sheet may be better taken out of the heat-exchange drying chamber by providing the plurality of air intake assemblies and the plurality of air return ports. By disposing the air return ports between the top wall of the heat-exchange drying chamber and the endless heating belt, the drying effect on the heat-exchange drying chamber may be improved.

In order to solve the above technical problem, the present application provides a second technical solution: there is provided a battery production system, including a coating device and an electrode sheet drying device, where the coating device is configured to coat a current collector with an active material layer to obtain a battery electrode sheet, and the electrode sheet drying device is the electrode sheet drying device according to any one of the embodiments described above.

### DESCRIPTION OF DRAWINGS

To describe technical solutions in embodiments of the present application more clearly, the following briefly describes the accompanying drawings for describing the embodiments. It is clear that the accompanying drawings described in the following are merely some embodiments of the present application. Those of ordinary skill in the art can still derive other accompanying drawings from these accompanying drawings without creative efforts.
FIG. 1 is a schematic side view of a structure of an electrode sheet drying device according to the present application;
FIG. 2 is a schematic diagram of a control module of an electrode sheet drying device according to the present application; and
FIG. 3 is a schematic diagram of a module of a battery production system according to the present application.

Description of reference signs:
10 - housing, 11 - heat-exchange drying chamber, 111 - inlet, 112 - outlet, 113 - bottom wall, 114 - top wall, 12 - support roller, 13 - air intake assembly, 131 - air intake port, 14 - air return assembly, 141 - air return chamber, 142 - air return port, 20 - endless heating belt, 21 - inner surface, 22 - outer surface, 30 - heating roller, 40 - passing roller, 50 - driving assembly, 51 - first driving assembly, 52 - second driving assembly, 60 - unrolling mechanism, 61 - unrolling reel, 70 - rolling mechanism, 71 - rolling reel, 80 - speed measuring assembly, 81 - first speed measuring roller, 82 - second speed measuring roller, 90 - controller, 100 - electrode sheet drying device, 200 - electrode sheet, 300 - battery production system, 301 - coating device.

### DESCRIPTION OF EMBODIMENTS

The following clearly and completely describes the technical solutions in the embodiments of the present application with reference to the accompanying drawings in the embodiments of the present application. Apparently, the described embodiments are merely some but not all of the embodiments of the present application. All other embodiments obtained by those of ordinary skill in the art based on the embodiments of the present application without creative efforts shall fall within the protection scope of the present application.

The terms "first" and "second" in the present application are only used for descriptive purposes, and should not be construed as indicating or implying relative importance or implicitly indicating the number of technical features indicated. Thus, features defined by "first" and "second" may explicitly or implicitly include at least one of the features. All directional indications (such as upper, lower, left, right, front, back,...) in the embodiments of the present application are merely used to explain the relative position relationship, movement situation, etc. between components in a specific posture (as shown in the drawings), and if the specific posture changes, the directional indication also changes. In addition, the terms "include", "be provided with", and any other variants thereof are intended to cover a non-exclusive inclusion. For example, a process, method, system, product, or device that includes a series of steps or units is not limited to the listed steps or units, but optionally further includes steps or units that are not listed, or optionally further includes other steps or units inherent to the process, method, product, or device.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In a battery production process, a battery electrode sheet is obtained by coating a current collector with an active material layer. The obtained battery electrode sheet needs to be heated and dried by a drying device. In an electrode sheet drying device of the related art, a heating chamber and a drying chamber are separately disposed, and a heating assembly and a drying assembly are separately disposed. Generally, the electrode sheet is first heated by the heating assembly in the heating chamber, and then the electrode sheet enters the drying chamber and is heated by the drying assembly.

Since the heating assembly usually adopts a plurality of heating manners including infrared heating, roller contact heating, and the like, the adjustment of process parameters is relatively complicated. In the roller contact heating manner, a roller surface is in direct contact with the electrode sheet to be heated, in which case a heat conduction area is small, resulting in low heating efficiency.

In order to solve the above problems, the applicant has found through research that, by heating an endless heating belt with a heating roller and making the heated endless heating belt in direct contact with the electrode sheet to result in a large contact area, the heating efficiency may be improved, and the difficulty of adjusting the process parameters may be reduced.

Since the drying assembly heats circulating air by using other energy sources, drying the electrode sheet through convection heating causes large energy consumption. Accordingly, in the electrode sheet drying device of the present application, a part of the endless heating belt passes through the heat-exchange drying chamber, and the other part thereof is disposed outside the heat-exchange drying chamber. The endless heating belt in the heat-exchange drying chamber is in contact with the electrode sheet to continuously heat the electrode sheet. Therefore, the electrode sheet drying device of the present application only needs to dry and dehumidify the entire heat-exchange drying chamber using circulating air, and does not need to heat the circulating air, thereby improving the heating and drying effect on the electrode sheet.

The technical solutions described in the embodiments of the present application are applicable to heating and drying of an electrode sheet of a battery, particularly a lithium battery, and is also applicable to drying of an electrode sheet of another type of battery, which is not limited in the present application.

The following describes the present application in detail in detail with reference to the accompanying drawings and embodiments.

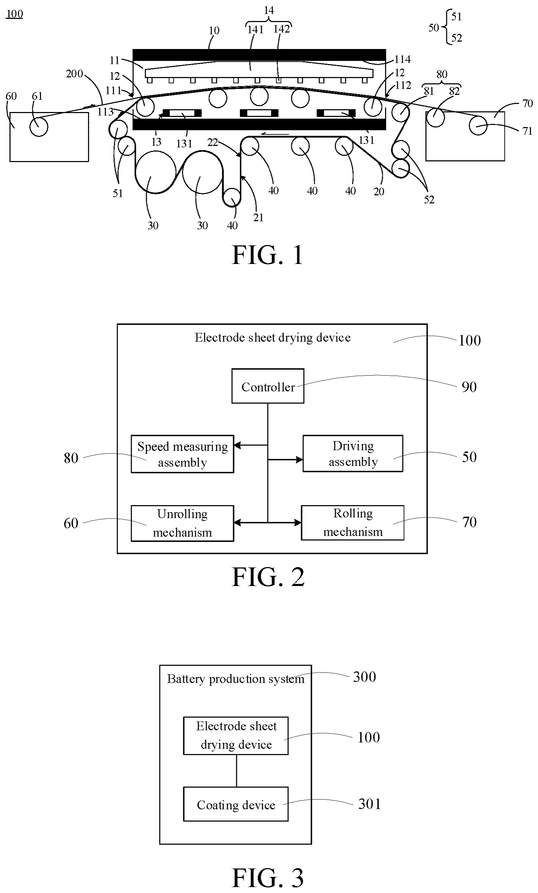

Referring to FIG. 1 and FIG. 2, FIG. 1 is a schematic side view of a structure of an electrode sheet drying device according to the present application; and FIG. 2 is a schematic diagram of a control module of an electrode sheet drying device according to the present application.

The electrode sheet drying device 100 provided by an embodiment of the present application includes a housing 10, an endless heating belt 20, a heating roller 30, a driving assembly 50, an unrolling mechanism 60, and a rolling mechanism 70. The housing 10 has a heat-exchange drying chamber 11, where the heat-exchange drying chamber 11 has an inlet 111 and an outlet 112 that are oppositely disposed. The endless heating belt 20 includes an inner surface 21 and an outer surface 22 that are oppositely disposed; and the driving assembly 50 is connected to the endless heating belt 20. The driving assembly 50 is configured to be capable of driving the endless heating belt 20 to continuously run; and the heating roller 30 is in contact with the endless heating belt 20 and is capable of heating the endless heating belt 20. In an embodiment, the heating roller 30 may also be used as a driving member for the endless heating belt 20 to drive the endless heating belt 20 to run. The unrolling mechanism 60 is disposed on a side of the inlet 111. The unrolling mechanism 60 may be provided with an unrolling reel 61, where the unrolling reel 61 is configured to be capable of carrying and releasing a roll material of the electrode sheet 200, so that the released electrode sheet 200 enters the heat-exchange drying chamber 11 from the inlet 111 and passes through the outlet 112. The rolling mechanism 70 is disposed on a side of the outlet 112, and the rolling mechanism 70 may be provided with a rolling reel 71, where the rolling reel 71 is configured to be capable of rolling up the electrode sheet 200 released from the outlet 112. A part of the endless heating belt 20 is disposed in the heat-exchange drying chamber 11, and the other part thereof is disposed outside the heat-exchange drying chamber 11, so that the endless heating belt 20 forms a circulating heating belt that enters the heat-exchange drying chamber 11 from the inlet 111 of the housing 10, then exits from the outlet 112, and then enters the inlet 111 of the housing 10. The released electrode sheet 200 is in contact with the outer surface 22 of the endless heating belt 20 in the heat-exchange drying chamber 11, so that the endless heating belt 20 heats the electrode sheet 200.

Specifically, the housing 10 in the present application may be understood as a box having a hollow chamber, where the heat-exchange drying chamber 11 is the hollow chamber of the box and is used to accommodate a part of the electrode sheet 200 and a part of the endless heating belt 20 to heat and dry the electrode sheet 200; and the heat-exchange drying chamber 11 may also be used to accommodate other assemblies, for example, a plurality of support rollers 12, an air intake component 13, and an air return component 14. The inlet 111 and the outlet 112 oppositely disposed may be understood as two ports disposed at two ends of a running direction of the electrode sheet 200 and the endless heating belt 20, where the inlet 111 is used for entering of the endless heating belt 20 and the electrode sheet 200, and the outlet 112 is used for exiting of the endless heating belt 20 and the electrode sheet 200. The inner surface 21 of the endless heating belt 20 is in contact with the support rollers 12, and the outer surface 22 is in contact with the electrode sheet 200. The heating roller 30 is in contact with the endless heating belt 20 to heat the endless heating belt 20, where the heating roller 30 may be in contact with the inner surface 21 of the endless heating belt 20 or may be in contact with the outer surface 22 of the endless heating belt 20.

The endless heating belt 20 in the present application may be understood as an endless belt-shaped body of a closed structure. The endless heating belt 20 has good heat conduction performance and is capable of conducting heat from the heating roller 30 to the electrode sheet 200 to heat the electrode sheet 200.

The driving assembly 50 in the present application may be understood as a power mechanism capable of driving the endless heating belt 20 to cyclically run, and may specifically be a rotatable columnar body, such as a driving roller, so as to facilitate the contact and connection between the driving assembly 50 and the endless heating belt 20.

The heating roller 30 in the present application may be understood as a rotating columnar body capable of heating the endless heating belt 20, for example, the heating roller 30 may be formed by disposing a heating film on an outer surface of the roller or disposing a heating body inside the roller.

The unrolling mechanism 60 in the present application may be understood as a mechanism capable of carrying and releasing the roll material of the electrode sheet 200, and the rolling mechanism 70 may be understood as a mechanism capable of rolling up the electrode sheet 200 released from the outlet 112. The unrolling mechanism 60 and the rolling mechanism 70 cooperate to realize the rolling and unrolling of the electrode sheet 200. It may be understood that running speeds of the unrolling mechanism 60 and the rolling mechanism 70 may be adjusted according to the rolling and unrolling degree of the roll material of the electrode sheet 200, so as to keep the electrode sheet 200 and the endless heating belt 20 synchronously run, and reduce the risk of pulling apart the electrode sheet 200.

"The unrolling mechanism 60 is disposed on a side of the inlet 111" in the present application may be understood as that the unrolling mechanism 60 is disposed directly opposite to, above, or below the side of the inlet 111 away from the outlet 112. Specifically, as shown in FIG. 1, the unrolling mechanism 60 is disposed below the side of the inlet 111 away from the outlet 112.

"The rolling mechanism 70 is disposed on a side of the outlet 112" in the present application may be understood as that the rolling mechanism 70 is disposed directly opposite to, above, or below the side away from the inlet 111. Specifically, as shown in FIG. 1, the rolling mechanism 70 is disposed below the side of the outlet 112 away from the inlet 111.

In one or more embodiments of the present application, the endless heating belt 20 is first heated by the heating roller 30, and then the released electrode sheet 200 is brought into contact with the outer surface 22 of the endless heating belt 20 in the heat-exchange drying chamber 11, so that the electrode sheet 200 abuts on and is heated by the endless heating belt 20, thereby improving the efficiency of heating the electrode sheet 200.

It may be understood that the other part of the endless heating belt 20 and the heating roller 30 may be disposed at the bottom or top of the outer side of the housing 10. In some embodiments, the other part of the endless heating belt 20 may specifically be disposed at the bottom of the outer side of the housing 10. There are a plurality of heating rollers 30, and the plurality of heating rollers 30 are disposed at the bottom of the housing 10, so that the plurality of heating rollers 30 are more easy to mount. In some embodiments, one of two adjacent ones of the heating rollers 30 is disposed in a loop of the endless heating belt 20 and is in contact with the inner surface 21 of the endless heating belt 20, and the other heating roller 30 is disposed outside the loop of the endless heating belt 20 and is in contact with the outer surface 22 of the endless heating belt 20. By disposing one heating roller 30 in the loop of the endless heating belt 20 and disposing the other heating roller 30 outside the loop of the endless heating belt 20, an area of the endless heating belt 20 abutting on the heating roller 30 may be increased, thereby improving the efficiency of heating the endless heating belt 20 by the heating roller 30.

In this embodiment of the present application, a plurality of heating rollers 30 are provided on each of the inner surface 21 and the outer surface 22 of the endless heating belt 20, and the plurality of heating rollers 30 are spaced apart in parallel in the horizontal direction, where the heating rollers 30 in contact with the inner surface 21 and the heating rollers 30 in contact with the outer surface 22 are alternately disposed, so that the inner surface 21 and the outer surface 22 of the endless heating belt 20 are alternately in contact with the heating rollers 30. By providing the plurality of heating rollers 30 on each of the inner surface 21 and the outer surface 22 of the endless heating belt 20, the efficiency of heating the endless heating belt 20 by the heating rollers 30 may be further improved.

In some embodiments, the plurality of heating rollers 30 are disposed on the side of the bottom of the housing 10 close to the inlet 111, so that the heated endless heating belt 20 can enter the heat-exchange drying chamber 11 as soon as possible after being heated to abut the electrode sheet 200, reducing a heat loss of the endless heating belt 20 between the time when the endless heating belt is heated by the heating rollers 30 and the time when the endless heating belt abuts on the electrode sheet 200 in the heat-exchange drying chamber 11, and thereby improving the efficiency of heating the electrode sheet 200.

In this embodiment of the present application, the electrode sheet drying device 100 further includes a passing roller 40. The passing roller 40 in the present application may also be understood as a rotatable columnar body capable of supporting a part of the endless heating belt 20 outside the housing 10. Specifically, the passing roller 40 is disposed at the bottom of the outer side of the housing 10, and the bottom of the outer side of the housing 10 herein may be understood as a part of the housing 10 close to the ground during use of the electrode sheet drying device 100. In some embodiments, the passing roller 40 is disposed at the bottom of the housing 10 and is in transmission contact with the endless heating belt 20. The passing roller 40 may be used to support the endless heating belt 20 to increase the running stability of the endless heating belt 20, so that the endless heating belt 20 may keep stably abutting on the electrode sheet 200. The transmission contact herein may be understood as that the endless heating belt 20 and the passing roller 40 are in contact and in transmission connection with each other, and the endless heating belt 20 is driven by the driving assembly 50 to cyclically run from the inlet 111 to the outlet 112 of the housing 10. In other embodiments, the other part of the endless heating belt 20, the heating roller 30, and the passing roller 40 may also be disposed on the top or side surface of the housing 10, as long as the connection relationship of the endless heating belt 20 with the housing 10, the heating roller 30, and the passing roller 40, and the contact heating between the endless heating belt 20 and the electrode sheet 200 can be achieved, which is not limited in the present application.

In this embodiment of the present application, the electrode sheet drying device 100 further includes a support roller 12. The support roller 12 in the present application may also be understood as a rotatable columnar body that supports the part of the endless heating belt 20 in the heat-exchange drying chamber 11. In some embodiments, the support roller 12 is disposed in the heat-exchange drying chamber 11 and located between the bottom wall 113 of the heat-exchange drying chamber 11 and the endless heating belt 20 in the heat-exchange drying chamber 11, so that the entire outer surface 22 of the endless heating belt 20 in the heat-exchange drying chamber 11 is exposed; the support roller 12 is in contact with the inner surface 21 of the endless heating belt 20, the support roller 12 may be used to support the endless heating belt 20 in the heat-exchange drying chamber 11, and a plurality of support rollers 12 may be set to form an arc shape with a height maximum in the middle and gradually decreasing toward two sides, so that the endless heating belt 20 in the heat-exchange drying chamber 11 is of an arc shape, increasing the area of the endless heating belt 20 abutting on the electrode sheet 200, and thereby improving the heating effect.

In some embodiments, there are a plurality of support rollers 12, the plurality of support rollers 12 are spaced apart in parallel in a direction from the inlet 111 to the outlet 112, and the heights of the plurality of support rollers 12 gradually increase and then gradually decrease. The plurality of support rollers 12 are disposed in the direction from the inlet 111 to the outlet 112, and may be evenly or unevenly spaced apart. The sizes of the plurality of support rollers 12 may be the same or different, as long as the height of a contact point between the support roller 12 disposed in the middle and the endless heating belt 20 is higher than the heights of contact points between the support rollers 12 disposed on the two sides and the endless heating belt 20, which is not limited in the present application.

In one or more embodiments of the present application, the support rollers 12 are disposed in the above manner, so that the endless heating belt 20 in the heat-exchange drying chamber 11 forms an arc shape protruding toward the top of the heat-exchange drying chamber 11, resulting in a larger area of contact with the electrode sheet 200, and thereby improving the efficiency of heating the electrode sheet 200.

In this embodiment, the heights of the unrolling mechanism 60 and the rolling mechanism 70 disposed relative to the housing 10 are not higher than the height of the support roller 12, so that the electrode sheet 200 forms an arc shape in the heat-exchange drying chamber 11, and thus may have a larger area of contact with the arc-shaped endless heating belt 20 in the heat-exchange drying chamber 11. In other embodiments, the unrolling mechanism 60 and the rolling mechanism 70 may also be disposed higher than the support roller 12. In this case, the passing rollers 40 may be disposed between the unrolling mechanism 60 and the support roller 12 and between the rolling mechanism 70 and the support roller 12 respectively, to press down the unrolling mechanism 60 and the rolling mechanism 70, so that the height of the electrode sheet 200 entering from the inlet 111 is still not higher than the height of the support roller 12, making the electrode sheet 200 form an arc shape in the heat-exchange drying chamber 11.

In some embodiments, the driving assembly 50 includes a first driving assembly 51 and a second driving assembly 52, the first driving assembly 51 is disposed on an outer side of the inlet 111, and the second driving assembly 52 is disposed on an outer side of the outlet 112. By disposing the driving assemblies 50 on the outer side of the inlet 111 and the outer side of the outlet 112 respectively, the running stability of the endless heating belt 20 and the uniformity of force applied to the endless heating belt may be improved.

In one or more embodiments of the present application, each of the first driving assembly 51 and the second driving assembly 52 includes two driving rollers, where one of the two driving rollers is in contact with the inner surface 21 of the endless heating belt 20, and the other is in contact with the outer surface 22 of the endless heating belt 20. Since each of the first driving assembly 51 and the second driving assembly 52 includes two driving rollers and the two driving rollers are disposed in the above manner, the contact area between the driving rollers and the endless heating belt 20 can be increased, increasing driving force of the driving rollers on the endless heating belt 20, and thereby improving the running stability of the endless heating belt 20 and the uniformity of force applied to the endless heating belt.

In this embodiment of the present application, the electrode sheet drying device 100 further includes a speed measuring assembly 80 and a controller 90, where the speed measuring assembly 80 is configured to be capable of measuring running speeds of the endless heating belt 20 and the electrode sheet 200. The speed measuring assembly 80 in the present application may be understood as any element capable of measuring the running speeds of the endless heating belt 20 and the electrode sheet 200, for example, it may be an image acquisition assembly, a speed measuring roller, or the like. The controller 90 in the present application may be understood as a control circuit, for example, a circuit board provided with a chip, etc. The controller 90 is electrically connected to each of the speed measuring assembly 80, the driving assembly 50, the unrolling mechanism 60, and the rolling mechanism 70. The controller 90 is configured to control the driving assembly 50 and/or the unrolling mechanism 60 according to the running speeds of the endless heating belt 20 and the electrode sheet 200 measured by the speed measuring assembly 80, so as to adjust the running speeds of the endless heating belt 20 and the electrode sheet 200 to make the endless heating belt 20 and the electrode sheet 200 run synchronously. The endless heating belt 20 and the electrode sheet 200 run synchronously, so that stable heat exchange can be achieved, reducing friction between the endless heating belt 20 and the electrode sheet 200, reducing wear of the endless heating belt 20 and the electrode sheet 200, and thereby improving the heating effect on the electrode sheet 200.

In a specific embodiment, the speed measuring assembly 80 may include a first speed measuring roller 81 and a second speed measuring roller 82, where the first speed measuring roller 81 is disposed on the outer side of the outlet 112 and is in contact with the endless heating belt 20 to measure the running speed of the endless heating belt 20. The second speed measuring roller 82 is disposed on the outer side of the outlet 112 and is in contact with the electrode sheet 200 to measure the running speed of the electrode sheet 200. The first speed measuring roller 81 and the second speed measuring roller 82 are disposed on the outer side of the outlet 112. On the one hand, since the electrode sheet 200 coming out of the outlet 112 has been heated and dried, the speed measuring rollers do not affect heat exchange between the endless heating belt 20 and the electrode sheet 200 even though the endless heating belt and the electrode sheet are in contact with the speed measuring rollers. On the other hand, the running speeds of the electrode sheet 200 and the endless heating belt 20 coming out of the outlet 112 can better reflect running speeds of the electrode sheet 200 and the endless heating belt 20 in the heat-exchange drying chamber 11, so that the speed measurement is more accurate.

In some embodiments, the outer surface 22 of the endless heating belt 20 is a smooth surface, for example, the outer surface 22 is polished to form the smooth surface, so that the endless heating belt 20 has roughness RA of 0.8-0.1 um, which can increase the contact area between the endless heating belt 20 and the electrode sheet 200, making the endless heating belt 20 better abut on the electrode sheet 200, and thereby improving the heating and drying efficiency.

In some embodiments, the endless heating belt 20 is a metal sheet. The metal sheet has good resilience and high thermal conductivity, which can improve the thermal conduction efficiency of the endless heating belt 20 for the electrode sheet 200.

In some embodiments, the metal sheet is a steel sheet. The steel sheet has the advantages of high strength, breaking resistance, and low cost.

In some embodiments, the thickness of the endless heating belt 20 may be 0.1-3 mm. In a specific embodiment, the thickness of the endless heating belt 20 is 0.5 mm. The thickness of the endless heating belt 20 is greater than the thickness of the electrode sheet 200. Compared with the heating roller 30 directly heating the electrode sheet 200, the endless heating belt 20 can better conduct heat from the heating roller 30 to each position on the electrode sheet 200 in the heat-exchange drying chamber 11, and can maintain a temperature of heating the electrode sheet 200 in the heat-exchange drying chamber 11 for a longer time.

In some embodiments, the width of the endless heating belt 20 is greater than or equal to the width of the electrode sheet 200, and the entire electrode sheet 200 abuts on the surface of the endless heating belt 20, so as to improve the heating effect.

Further, the width of the endless heating belt 20 is greater than the width of the electrode sheet 200, and two sides of the endless heating belt 20 in the width direction are each provided with a plurality of protrusions (not shown) spaced apart, for example, the plurality of protrusions spaced apart are circumferentially disposed along the entire circumference of the endless heating belt 20. The protrusions are disposed on the two sides of the endless heating belt 20 in the width direction to limit the electrode sheet 200, preventing the electrode sheet 200 from deviating from the endless heating belt 20.

In this embodiment of the present application, the electrode sheet drying device 100 further includes an air intake assembly 13 and an air return assembly 14. The controller 90 may control driving members for the air intake assembly 13 and the air return assembly 14 and the driving assembly 50 to run independently, and the driving members for the air intake assembly 13 and the air return assembly 14 may be fans, air pumps, cylinders, or the like. Alternatively, the controller 90 may include a first control unit (not shown) and a second control unit (not shown), where the first control unit controls the running of the driving assembly 50; the second control unit controls the running of the driving members for the air intake assembly 13 and the air return assembly 14, and the controller 90 controls the first control unit and the second control unit to run independently of each other, so that a heating system (not shown) and an air return system (not shown) of the entire electrode sheet drying device 100 can run as two independent systems without interfering with each other. It may be understood that the heating system includes the passing roller 40, the first speed measuring roller 81, the heating roller 30, the endless heating belt 20, and the like. The air return system includes the air intake assembly 13, the air return assembly 14, the driving member for the air intake assembly 13, the driving member for the air return assembly 14, and the like. Since a part of the endless heating belt 20 passes through the heat-exchange drying chamber 11, the endless heating belt 20 in the heat-exchange drying chamber 11 is in contact with the electrode sheet 200 to continuously heat the electrode sheet 200. The electrode sheet drying device 100 of the present application only needs to dry and dehumidify the entire heat-exchange drying chamber 11 using circulating air, and does not need to heat the circulating air, thereby improving the heating and drying effect on the electrode sheet 200. That is, the air intake assembly 13 of the present application does not need to be provided with a heating element.

In some embodiments, one of the air intake assembly 13 and the air return assembly 14 is disposed between the bottom wall 113 of the heat-exchange drying chamber 11 and the endless heating belt 20 in the heat-exchange drying chamber 11, and the other is disposed between the top wall 114 of the heat-exchange drying chamber 11 and the endless heating belt 20 in the heat-exchange drying chamber 11. The air intake assembly 13 and the air return assembly 14 are disposed in the above manner to enable air coming from the outside to directly pass through the dried electrode sheet 200, and the air intake assembly 13 and the air return assembly 14 form circulating air in the heat-exchange drying chamber 11, so that the circulating air takes away a solvent diffused by the heated electrode sheet 200 to dry and dehumidify the heat-exchange drying chamber 11, thereby ensuring that the electrode sheet 200 is in a negative-pressure dry state.

In a specific embodiment, the air return assembly 14 may be disposed between the top wall 114 of the heat-exchange drying chamber 11 and the endless heating belt 20 in the heat-exchange drying chamber 11, the air return assembly 14 has an air return chamber 141, and a plurality of air return ports 142 spaced apart in the direction from the inlet 111 to the outlet 112 are provided on a bottom wall 113 of the air return chamber 141. The air intake assembly 13 is disposed between the bottom wall 113 of the heat-exchange drying chamber 11 and the endless heating belt 20 and has an air intake port 131, where the air intake port 131 may specifically be an air nozzle for air discharge, and the air nozzle may be a dense-mesh air nozzle or a slit air nozzle. The air nozzle may be mounted in a quick-release snap-fit manner, so as to facilitate fixing on an inner wall of the box. There are a plurality of air intake assemblies 13, and the plurality of air intake assemblies 13 are spaced apart in the direction from the inlet 111 to the outlet 112.

In one or more embodiments of the present application, the solvent volatilized by the electrode sheet 200 may be better taken out of the heat-exchange drying chamber 11 by providing the plurality of air intake assemblies 13 and the plurality of air return ports 142. By disposing the air return ports 142 between the top wall 114 of the heat-exchange drying chamber 11 and the endless heating belt 20, the drying effect on the heat-exchange drying chamber 11 may be improved.

Referring to FIG. 3, FIG. 3 is a schematic diagram of a module of a battery production system according to the present application.

The battery production system 300 provided in the present application includes a coating device 301 and an electrode sheet drying apparatus 100, where the coating device 301 is configured to coat a current collector with an active material layer to obtain a battery electrode sheet 200, and the electrode sheet drying device 100 may be the electrode sheet drying device 100 according to any one of the embodiments described above, which is no longer described in detail herein again.

It may be understood that the battery production system 300 of the present application may further include a battery assembly device (not shown), etc.. For example, the battery electrode sheet 200 dried by the electrode sheet drying device 100 may be prepared into a cell (not shown), and then the cell and a battery housing (not shown) are assembled by the battery assembly device to form a battery cell (not shown), which is not specifically limited in the present application.

In several embodiments provided in the present application, it should be understood that the disclosed systems, devices, and methods may be implemented in other ways. For example, the device embodiments described above are merely illustrative. For example, the division of the units is merely a logical function division, and there may be other division manners in actual implementation. For example, a plurality of units or assemblies may be combined or may be integrated into another system, or some features may be ignored or not performed. On the other hand, the mutual coupling or direct coupling or communication connection shown or discussed may be through some interfaces, and the indirect coupling or communication connection between the devices or units may be in an electrical, mechanical or other forms.

In addition, various functional units in the various embodiments of the present application may be integrated into one processing unit, or various units may be physically present separately, or two or more units may be integrated into one unit. The above integrated unit may be implemented in a form of hardware, or may be implemented in a form of a software functional unit.

The foregoing is merely an implementation of the present application, and is not intended to limit the patent scope of the present application, and any equivalent structure or process modifications made by using the content of the description and the accompanying drawings of the present application, directly or indirectly applied in other related technical fields, are also included in the patent protection scope of the present application.

## Claims

1. An electrode sheet drying device, comprising:
a housing having a heat-exchange drying chamber, wherein the heat-exchange drying chamber has an inlet and an outlet that are oppositely disposed;
an endless heating belt comprising an inner surface and an outer surface that are oppositely disposed; and
a heating roller in contact with the endless heating belt,
wherein a part of the endless heating belt passes through the heat-exchange drying chamber, and the other part thereof is disposed outside the heat-exchange drying chamber; and the released electrode sheet is in contact with the outer surface of the endless heating belt in the heat-exchange drying chamber.

2. The electrode sheet drying device according to claim 1, wherein the other part of the endless heating belt is disposed at the bottom of the housing; there are a plurality of heating rollers, and the plurality of heating rollers are disposed at the bottom of the housing; one of two adjacent ones of the heating rollers is disposed in a loop of the endless heating belt and is in contact with the inner surface of the endless heating belt, and the other heating roller is disposed outside the loop of the endless heating belt and is in contact with the outer surface of the endless heating belt.

3. The electrode sheet drying device according to claim 2, wherein the plurality of heating rollers are disposed on a side of the bottom of the housing close to the inlet.

4. The electrode sheet drying device according to any one of claims 1 to 3, further comprising:
a passing roller disposed at the bottom of the housing and in transmission contact with the endless heating belt; and
a support roller disposed in the heat-exchange drying chamber and located between a bottom wall of the heat-exchange drying chamber and the endless heating belt in the heat-exchange drying chamber, wherein the support roller is in contact with the inner surface of the endless heating belt.

5. The electrode sheet drying device according to claim 4, wherein there are a plurality of support rollers; the plurality of support rollers are spaced apart in parallel in a direction from the inlet to the outlet, and the heights of the plurality of support rollers gradually increase and then gradually decrease.

6. The electrode sheet drying device according to any one of claims 1 to 5, further comprising:
a driving assembly connected to the endless heating belt, wherein the driving assembly is configured to be capable of driving the endless heating belt to continuously run;
an unrolling mechanism disposed on a side of the inlet, wherein the unrolling mechanism is configured to be capable of carrying and releasing a roll material of the electrode sheet, so that the released electrode sheet enters the heat-exchange drying chamber from the inlet and passes through the outlet; and
a rolling mechanism disposed on a side of the outlet, wherein the rolling mechanism is configured to be capable of rolling up the released electrode sheet that comes out from the outlet.

7. The electrode sheet drying device according to claim 6, wherein the driving assembly comprises a first driving assembly and a second driving assembly, the first driving assembly is disposed on an outer side of the inlet, and the second driving assembly is disposed on an outer side of the outlet.

8. The electrode sheet drying device according to any one of claims 1 to 7, further comprising:
a speed measuring assembly configured to be capable of measuring running speeds of the endless heating belt and the electrode sheet; and
a controller electrically connected to each of the speed measuring assembly, the driving assembly, and the unrolling mechanism, wherein the controller is configured to control the driving assembly and/or the unrolling mechanism according to the running speeds of the endless heating belt and the electrode sheet measured by the speed measuring assembly, so as to adjust the running speeds of the endless heating belt and the electrode sheet to make the endless heating belt and the electrode sheet run synchronously.

9. The electrode sheet drying device according to claim 8, wherein the speed measuring assembly comprises:
a first speed measuring roller disposed on the outer side of the outlet and in contact with the endless heating belt to measure the running speed of the endless heating belt; and
a second speed measuring roller disposed on the outer side of the outlet and in contact with the electrode sheet to measure the running speed of the electrode sheet.

10. The electrode sheet drying device according to any one of claims 1 to 9, wherein the outer surface of the endless heating belt is a smooth surface.

11. The electrode sheet drying device according to any one of claims 1 to 10, wherein the endless heating belt is a metal sheet.

12. The electrode sheet drying device according to claim 11, wherein the metal sheet is a steel sheet.

13. The electrode sheet drying device according to any one of claims 1 to 12, wherein an air intake assembly and an air return assembly are provided in the heat-exchange drying chamber, one of the air intake assembly and the air return assembly is disposed between the bottom wall of the heat-exchange drying chamber and the endless heating belt in the heat-exchange drying chamber, and the other is disposed between a top wall of the heat-exchange drying chamber and the endless heating belt in the heat-exchange drying chamber.

14. The electrode sheet drying device according to claim 13, wherein the air return assembly is disposed between the top wall of the heat-exchange drying chamber and the endless heating belt in the heat-exchange drying chamber, the air return assembly has an air return chamber, and a plurality of air return ports spaced apart in the direction from the inlet to the outlet are provided on a bottom wall of the air return chamber; the air intake assembly is disposed between the bottom wall of the heat-exchange drying chamber and the endless heating belt in the heat-exchange drying chamber and has an air intake port, there are a plurality of air intake assemblies, and the plurality of air intake assemblies are spaced apart in the direction from the inlet to the outlet.

15. A battery production system, comprising:
a coating device, configured to coat a current collector with an active material layer to obtain a battery electrode sheet; and
an electrode sheet drying device, wherein the electrode sheet drying device is the electrode sheet drying device according to any one of claims 1 to 14.
